# EUROPÄISCHE PATENTSCHRIFT

(11) **EP 1 252 766 B1**
(45) Veröffentlichungstag und Bekanntmachung des Hinweises auf die Patenterteilung: **14.01.2004**
(21) Anmeldenummer: 01909528.0
(22) Anmeldetag: 23.01.2001
(51) Int. Cl.: H04N 7/14, H04N 7/18

(54) **TELEKOMMUNIKATIONSANLAGE**
TELECOMMUNICATIONS INSTALLATION
INSTALLATION DE TELECOMMUNICATION

(30) Priorität: 27.01.2000 DE 10004348
(43) Veröffentlichungstag der Anmeldung: 30.10.2002
(73) Patentinhaber: Detewe-Deutsche Telephonwerke Aktiengesellschaft & Co., 10997 Berlin (DE)
(72) Erfinder: KIND, Volker, 24161 Altenholz (DE)
(74) Vertreter: Ninnemann, Detlef, Dipl.-Ing.
(86) Internationale Anmeldenummer: PCT/DE2001/000319
(87) Internationale Veröffentlichungsnummer: WO 2001/056283

(56) Entgegenhaltungen:
- EP-A- 0 762 763
- WO-A-98/34360
- WO-A-99/07143

## Beschreibung

Die Erfindung betrifft eine Telekommunikationsanlage zur Übertragung von Video- und/oder Audiosignalen nach dem Oberbegriff des Anspruchs 1.

Heute übliche Telekommunikationsanlagen weisen immer häufiger auch eine Schnittstelle auf, die den Anschluß von Bildtelefonen erlaubt. Die Telekommunikationsanlage vermittelt unter anderem Gespräche mit Audio- und/oder Videosignalen zwischen verschiedenen Teilnehmern der Anlage selbst oder zu Teilnehmern, die über das öffentliche Telekommunikationsnetz mit der Anlage kommunizieren können.

Die Leistungen, die den Nutzern der Bildtelefone zur Verfügung stehen, beschränken sich hierbei auf das transparente Durchschalten der Audio- und/oder Videosignale zwischen den Teilnehmern. Weitere zusätzliche Leistungen, die die Telekommunikationsanlage unterstützt, sind dagegen für ein Bildtelefon nur dann nutzbar, wenn dieses die Leistungen unterstützt, d.h. die Leistungsmerkmale der Anlage müssen in den Systemendgeräten selbst verfügbar sein. Eine solche Anpassung des Bildtelefons an die Telekommunikationsanlage ist teuer und unflexibel, da sie auf den Betrieb mit einer bestimmten Anlage oder zumindest mit Anlagen eines bestimmten Herstellers beschränkt ist.

In der Telekommunikationstechnik ist es allgemein bekannt, unkodierte Videosignale in an das Endgerät angepaßte, echtzeitcodierte Videosignale umzuwandeln. So ist in der DE 196 31 939 A1 ein Video-Server beschrieben, der in der Lage ist, das benötigte Datenformat und Datenprotokoll eines mit dem Videoserver verbundenen Bildtelefons zu erkennen und daraufhin Video- und Audiosignale in dem jeweiligen, dem Bildtelefon entsprechenden Datenformat und Datenprotokoll an das Bildtelefon zu senden. Auf diese Weise kann eine Vielzahl unterschiedlicher Bildtelefone bedient werden. Die Erzeugung der codierten Video- und Audiosignale erfolgt mit Hilfe einer Vielzahl von Videound Audiosignalgeneratoren, die entsprechend dem Datenformat und Datenprotokoll des jeweiligen Bildtelefons ausgewählt werden. Eine interaktive Steuerung des Video-Servers über das Bildtelefon ist ebenfalls vorgesehen.

Allerdings ist die Funktionalität dieses Video-Servers für den einzelnen Benutzer auf eine Leistung, nämlich das Abspielen von Videos, beschränkt. Eine darüberhinausgehende Unterstützung der von Telekommunikationsanlagen unterstützten Leistungen, insbesondere die gleichzeitige Inanspruchnahme mehrer Leistungen durch ein Bildtelefon ist nicht möglich.

Aus der WO 98/34360, aus der WO 99/07143 und aus der EP 0 762 763 sind jeweils ähnliche Telekommunikationsanlagen bekannt, die seitens eines mit einem Bildschirm ausgestatteten Endgerätes die Darstellung eines oder mehrerer Videosignale ermöglicht. Eine Konfiguration der Leistungsmerkmale der Telekommunikationsanlage durch ein derartiges Endgerät ist jedoch entweder gar nicht vorgesehen oder nur, wie in der WO 98/34360 beschrieben, durch ein mit spezieller Hard- und Software ausgestattetes Endgerät möglich.

Der vorliegenden Erfindung liegt daher die Aufgabe zugrunde, eine Telekommunikationsanlage zur Übertragung von Video- oder Audiosignalen zu schaffen, die es den Benutzern von mit der Telekommunikationsanlage verbundenen Telekommunikationsendgeräten mit Bildanzeigevorrichtung, insbesondere Bildtelefonen, ermöglicht, ohne zusätzliche Hard- und Software auch während der Inanspruchnahme einer Leistung den Abruf und/oder die Programmierung von Leistungsmerkmalen der Telekommunikationsanlage zu ermöglichen.

Diese Aufgabe wird erfindungsgemäß durch eine Telekommunikationsanlage mit den Merkmalen des Anspruchs 1 gelöst.

Erfindungsgemäß ist vorgesehen, daß das mindestens eine weitere Videosignal Benutzerführungsinformationen zur Abfrage und/oder zur Programmierung von Leistungsmerkmalen der Telekommunikationsanlage mittels der Tastatur des Telekommunikationsendgerätes enthält.

Unter Leistungsmerkmale fallen hierbei alle benutzerspezifisch oder global einstellbaren Merkmale von Leistungen, die die Telekommunikationsanlage den Benutzern der Telekommunikationsanlage aber auch Außenstehenden zur Verfügung stellt. Dem Benutzer eine Telekommunikationsendgerätes mit Bildanzeigevorrichtung und Tastatur wird auf diese Weise die Funktionalität eines anlagenspezifischen Systemendgerätes zur Verfügung gestellt, das insbesondere die Programmierung der Anlage erlaubt.

Mit der vorliegenden Erfindung werden die Möglichkeiten, die eine Telekommunikationsanlage dem Benutzer eines handelsüblichen Bildtelefons bieten kann, erheblich erweitert, denn das zweite Videosignal mit den Benutzerführungsinformationen ermöglicht es der Telekommunikationsanlage, auch während der Übertragung des ersten Videosignals weitere Leistungsmerkmale der Telekommunikationsanlage abzufragen und/oder zu programmieren. Insbesondere wird es ermöglicht, während eines Telefonates, bei dem auch Videosignale übertragen werden, diese zusätzlichen Bildinformationen zur Verfügung zu stellen. Der Videosignalgenerator erlaubt insbesondere auch die Kombination mehrerer Bildinformationen, die von der Telekommunikationsanlage 1 angeboten werden.

In einer Ausführungsform blendet der Videosignalgenerator das mindestens eine weitere Videosignal als Nebenbild in das erste Videosignal ein. Das an das Telekommunikationsendgerät übertragene kombinierte Videosignal enthält somit das erste Videosignal als Hauptbild und das mindestens eine weitere Videosignal als Nebenbild.

In einer Variante enthält das mindestens eine weitere Videosignal ein Auswahlmenü, in dem den Menüfeldern Tastaturcodes zugeordnet sind.

Alternativ enthält das mindestens eine weitere Videosignal Informationen über den Status der Telekommunikationsanlage und/oder mit der Telekommunikationsanlage verbundenen Telekommunikationsendgeräten. Eine Programmierung der Anlage ist somit möglich, ohne den Zugriff auf andere Leistungen zu unterbinden.

Beim Anschluß mehrerer Audio- oder Bildtelefone an eine Telekommunikationsanlage kann eine sogenannte "Chef-Sekretär-Funktion" für das Telekommunikationsendgerät implementiert werden, bei der die Sekretärin sich bei Annahme des Gesprächs, das für einen anderen Teilnehmer bestimmt ist, über den Besetztzustand dessen Telekommunikationsendgerätes informieren kann.

Weitere Einzelheiten, Merkmale und Vorteile der Erfindung ergeben sich aus der nachfolgenden Beschreibung mehrerer Ausführungsbeispiele unter Bezugnahme auf die Zeichnungen.

Es zeigen:
- Figur 1 -: den schematischen Aufbau einer Telekommunikationsanlage mit einem Videosignalgenerator;
- Figur 2 -: eine Ausführungsform einer Telekommunikationsanlage mit Videosignalgenerator und mehreren Bildtelefonen;
- Figur 3 -: ein von dem Videosignalgenerator der Telekommunikationsanlage generiertes Auswahlmenü;
- Figur 4 -: eine Variante eines vom Videosignalgenerator der Telekommunikationsanlage generierten Auswahlmenüs;
- Figur 5 -: eine Ausführungsform einer "Chef-Sekretär-Funktion" im Vollbild;
- Figur 6 -: eine Ausführungsform einer "Chef-Sekretär-Funktion" mit einem in das Hauptbild eingeblendeten Nebenbild;
- Figur 7 -: eine Ausführungsform einer Telekommunikationsanlage mit Überwachungsfunktion durch eine an ein LAN angeschlossene Videokamera und
- Figur 8 -: eine Variante der Telekommunikationsanlage mit Überwachungsfunktion gemäß Figur 7 miteiner direkt an die Telekommunikationsanlage angeschlossenen Videokamera.

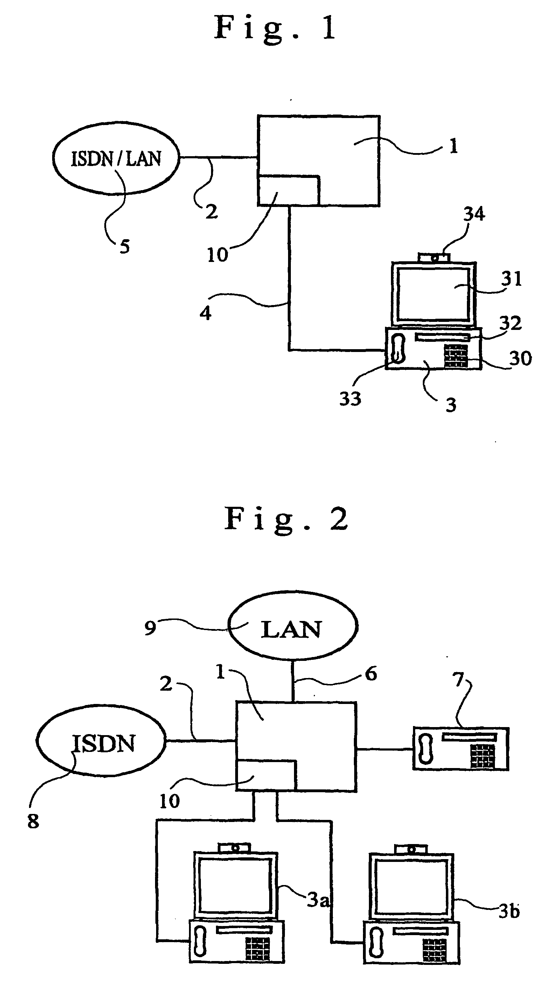

In Fig. 1 ist eine Telekommunikationsanlage 1 dargestellt, die eine Schnittstelle 2 zu einem übergeordneten Netz, zum Beispiel einem analogen oder digitalen öffentlichen (ISDN-) Netz 5, aber auch übergeordneten internen Netzen (Local Area Network - LAN), aufweist.

Die Telekommunikationsanlage 1 besitzt eine Schnittstelle 4, an die ein handelsübliches und anlagenunabhängiges Telekommunikationsendgerät mit Bildanzeigevorrichtung, in diesem Fall ein Bildtelefon 3, anschließbar ist. Bei der Schnittstelle 4 kann es sich um eine schnurgebundene Schnittstelle oder eine Funkschnittstelle handeln. Über die Schnittstelle 4 zwischen dem Bildtelefon 3 und der Telekommunikationsanlage 1 werden die Audio- und Videosignale mit Hilfe eines dem Bildtelefon 3 und der Schnittstellenart entsprechenden Datenformates und Datenprotokolles übertragen. Dabei existieren zur Zeit für die verschiedenen Arten von Schnittstellen unterschiedliche Standards für die Datenprotokolle. Hier seien beispielhaft der H.320-Standard für Bildtelefonie über Kanäle mit 64 kBit/s, der H.321-Standard für Bildtelefonie über Breitband-ISDN- oder ATM-Schnittstellen, der H322- und H323-Standard für Bildtelefonie über TCP/IP-Verbindungen und der H.324-Standard über analoge Verbindungen genannt, eine übertragung auf zukünftige Standard ist jedoch ohne weiteres möglich.

Das Bildtelefon 3 weist eine Telefontastatur 30, eine Bildanzeigevorrichtung in Form eines Bildschirms 31 zur Darstellung empfangener Videosignale, eine Hör- und Sprecheinrichtung 33 sowie eine Videokamera 34. Darüber hinaus kann ein weiteres Display 32 zur Darstellung von kurzen Textinformationen, Steuerzeichen, Symbolen oder dergleichen vorgesehen werden.

Die Telekommunikationsanlage 1 enthält einen Videosignalgenerator 10, der zur Generierung von Videosignalen dient, die über die Schnittstelle 4 an das Bildtelefon 3 geleitet werden und die das Bildtelefon 3 auf dem Bildschirm 31 darstellt. Für das Bildtelefon 3 macht es dabei keinen Unterschied, ob das Videosignal von der Anlage generiert wird oder ob es sich um ein transparent durchgeschaltetes Videosignal eines anderen Bildtelefones handelt. Es empfängt in beiden Fällen ein Videosignal in einem von ihm verarbeitbaren Datenformat und Datenprotokoll.

Die erfindungsgemäße Telekommunikationsanlage 1 ist neben der Bereitstellung eines von dem Videosignalgenerator 10 erzeugten ersten Videosignals weiterhin in der Lage, ein zweites Videosignal für das Bildtelefon 3 zu erzeugen..Die Übertragung des zweiten Videosignals kann zum einen erfolgen, indem die Übertragung des ersten Videosignals unterbrochen wird und stattdessen das zweite Videosignal über die Schnittstelle 4 zu dem Bildtelefon 3 übertragen wird. Zum anderen ist es möglich, das erste und das zweite Videosignal zu kombinieren und dieses kombinierte Videosignal dem Bildtelefon zuzuführen. Eine solche Kombination der Videosignale erfolgt durch Einblendung des durch das zweite Videosignal übertragene Videobild in das durch das erste Videosignal übertragene Videobild in Form eines Nebenbildes. Die technische Realisierung der Einblendung selbst ist aus der Fernsehtechnik seit längerem bekannt, so daß diesbezüglich auf bereits verfügbare Verfahren und Vorrichtungen verwiesen wird.

Fig. 2 zeigt eine Telekommunikationsanlage 1, an die neben einem ersten Bildtelefon 3a auch andere kommunikationsendgeräte wie ein zweites Bildtelefon 3b und ein Audiotelefon 7 angeschlossen sind. Die Schnittstelle 2 ermöglicht in diesem Fall den Zugang zu einem öffentlichen (ISDN-) Netz 8, über das eine Verbindung zu anderen Bildtelefonen hergestellt werden kann. Immer wichtiger wird heute auch die Möglichkeit, über eine Schnittstelle 6 auf ein lokales Netzwerk (LAN) 9 zugreifen zu können, um den Zugriff auf Computerdienste dieses lokalen Computernetzwerkes zu ermöglichen.

Mit der vorliegenden Erfindung werden die Möglichkeiten, die eine Telekommunikationsanlage dem Benutzer eines handelsüblichen Bildtelefones bieten kann, erheblich erweitert, denn das zweite Videosignal ermöglicht es der Telekommunikationsanlage, auch während der Übertragung des ersten Videosignals dem Bildtelefon weitere Bildinformationen zuzuführen. Dies erlaubt insbesondere auch die Kombination mehrerer Leistungen, die von der Telekommunikationsanlage 1 angeboten werden.

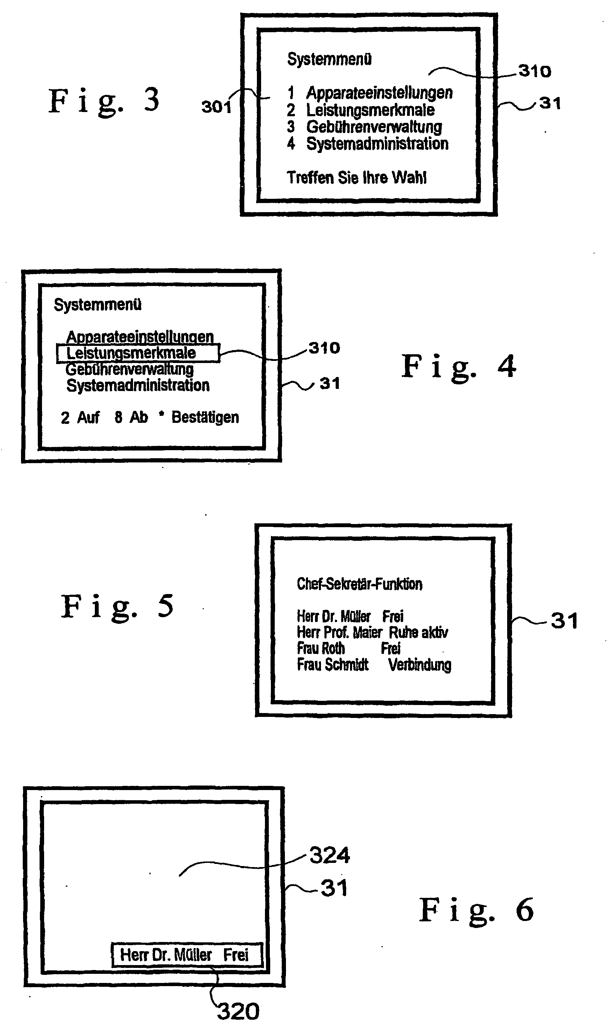

In den Figuren 3 und 4 ist jeweils ein Videobild symbolisch dargestellt, das ein Bedienmenü enthält, welches dem Benutzer des Bildtelefons die Einstellung von Leistungsmerkmalen einer Telekommunikationsanlage mit Hilfe der Bildtelefontastatur 30 gemäß Figur 1 ermöglicht. Der wesentliche Vorteil besteht dabei darin, auch während der Programmierung der Telekommunikationsanlage das Bildtelefon für andere Dienste zur Verfügung zu stellen. So können zum Beispiel ankommende Gespräche, E-mails etc. in einem Nebenbild auf dem Bildschirm 31 des Bildtelefons signalisiert werden.

Der Einstieg in ein solches von dem Videosignalgenerator 10 gemäß Figur 1 erzeugtes Bedienmenü erfolgt bevorzugt durch die Wahl einer vorgegebenen Kennziffer oder Sondertaste der Bildtelefontastatur 30. Besonders geeignet sind hierfür die heute üblicherweise vorgesehenen Sondertasten "*" und "#", eventuell in Kombination mit anderen Tasten. Häufig sind bei modernen Bildtelefonen auch andere Sondertasten vorhanden, die entsprechend belegt werden können. Auf diese Anfrage stellt die Telekommunikationsanlage eine vermittlungstechnische Verbindung zu dem Bildtelefon her, die üblicherweise einen Signalisierungskanal zum Austausch von Zeichengabe-Informationen und einen Nutzkanal enthält, in dem die Nutzdaten, in diesem Fall die Audio- und Videosignale, übertragen werden.

Wie in Figur 3 dargestellt, können die einzelnen Menüpunkte 310 hierbei als Textzeilen inklusive einer Auswahlnummer 301 oder eines Eingabefeldes auf dem Bildschirm 31 des Bildtelefones dargestellt werden. Die Auswahl der dargestellten Menüpunkte 310 oder eine Eingabe in ein Eingabefeld erfolgt über das Wählen der entsprechenden Ziffern oder Ziffernkombinationen der Bildtelefontastatur.

Wie in Figur 4 dargestellt, kann alternativ zunächst der richtige Menüpunkt 310 durch betätigen vorgegebener Navigationstasten, mit Hilfe derer zwischen den einzelnen Menüpunkten hin- und hergesprungen werden kann, auf dem Bildschirm ausgewählt werden. Die Bestätigung der Auswahl des entsprechenden Menüpunktes 310 erfolgt anschließend durch eine vorgegebene Bestätigungstaste. Die Eingabe in ein ausgewähltes Eingabefeld zur Änderung von Einstellungen erfolgt ebenfalls über die Tastatur des Bildtelefons. Zur Benutzerführung wird hierbei die Kodierung der Tasten, d.h. die mit den Tasten auslösbare Aktion, auf dem Bildschirm 31 angezeigt.

Besonders einfach ist die Auswahl bei Bildtelefonen, die mit Touch-Screens ausgerüstet sind, da hier direkt über die Berührung des Menüpunktes auf dem Bildschirm ausgewählt werden kann.

Wie in den Figuren 5 und 6 gezeigt, kann die Telekommunikationsanlage dem Benutzer des Bildtelefons mit Hilfe des zweiten Videosignale den Status, insbesondere den Besetztzustand weiterer an die Telekommunikationsanlage angeschlossener Bildtelefone oder Audiotelefone im Gesprächszustand des einen Bildtelefons anzeigen. Die Anzeige des Status von Schnittstellen zu anderen Telekommunikationsnetzen wie der Netzwerkschnittstelle oder der Schnittstelle zum öffentlichen Netz ist ebenfalls vorgesehen.

Auf diese Weise kann eine sogenannte "Chef-Sekretär-Funktion" für ein Bildtelefon 3 unterstützt werden. Bei der Implementierung eines solchen Leistungsmerkmals kann einer Sekretärin, die einen Anruf für ihren Chef auf ihrem Bildtelefon entgegennimmt, der Status des Chefapparates, bei dem es sich um ein Bildtelefon oder ein Audiotelefon handeln kann, optisch auf dem Bildschirm 31 dargestellt werden. Die Einblendung des Status erfolgt entweder auf Anforderung des Benutzers des Bildtelefons durch Wahl einer Taste der Tastatur oder automatisch. Die automatische Einblendung ist dann besonders sinnvoll, wenn einem Bildtelefon ein Telefongespräch vermittelt wird, bei dem ausschließlich Audiosignale übertragen werden und der Bildschirm 31 für die Gesprächsführung nicht benötigt wird. In diesem Fall kann der Videosignalgenerator der Telekommunikationsanlage das Audiogespräch in ein Bildtelefonie-Gespräch umwandeln, wobei die Audioinformation dieses Gesprächs von dem Audiogespräch stammt und als Bildinformation die Darstellung des Status eingefügt wird.

Auch hier kann der gesamte Bildschirm für die Darstellung verwendet werden wie es in Figur 5 dargestellt ist, wobei das Videosignal des Telefongesprächs kurz unterbrochen, das Videosignal mit dem Menü eingeblendet wird und anschließend das Videosignal des Telefongesprächs wieder übertragen wird. Günstig kann es sein, den Status aller Telekommunikationsendgeräte einer Abteilung, Gruppe oder auch des gesamten Betriebes anzuzeigen, aus denen dann eine Person ausgewählt werden kann, deren Gerät nicht besetzt ist.

In Figur 6 ist eine automatische Einblendung der Information über den Besetztzustand eines anderen Bildtelefons oder Audiotelefons als "On-Screen-Display" in Form eines kleinen Nebenbildes 320 neben dem Hauptbild 324 auf dem Bildschirm 31 des Bildtelefons gezeigt. Die Größe und Position des eingeblendeten Nebenbildes 320 wird hierbei so gewählt, daß es nur geringe Teile des Hauptbildes 324 abdeckt und bei der Gesprächsführung möglichst wenig stört.

Eine weitere Anwendung dieser automatischen Einblendung besteht darin, das sogenannte "Anklopfen" eines weiteren Anrufers nicht nur akustisch durch einen Anklopfton, sondern auch visuell zu signalisieren. Zu diesem Zweck erzeugt der Videosignalgenerator ein Videosignal für das Bildtelefon, das eine eingeblendete Rufnummer des Anrufers und eventuell verfügbare weitere Informationen über den Anrufer enthält.

Die erfindungsgemäße Telekommunikationsanlage bietet aber auch die Möglichkeit, andere Informationen, die für den Benutzer des Bildtelefons nützlich sind, in Form von Bildinformationen bereitzustellen. Während des Gespräches ist es möglich, die Gesprächsdauer und die bisher aufgelaufenen Telefonkosten entweder als Zahl oder als Grafik, z.B. in Form eines Fortschrittsbalkens darzustellen.

Weiterhin kann die Bereitstellung einer Telefonbuchfunktion erfolgen, die den Benutzer des Bildtelefons über interne oder auch externe Telefonnummern informiert. Die Anwahl der Nummer erfolgt dabei durch Auswahl über den Bildschirm wie oben beschrieben.

Darüber hinaus können auf dem Bildschirm des Bildtelefons beispielsweise hausinterne Kurznachrichten, wichtige persönliche Termine, Anlagenfehler und vieles andere mehr angezeigt werden. Unter Umständen kann dies in Kombination mit einem Audiosignal erfolgen. Selbst die Implementierung eines persönlichen Terminplaners in die Telekommunikationsanlage ist realisierbar.

Eine weitere wichtige Anwendung der Telekommunikationsanlage ist die Schaltung von Videokonferenzen, sowohl zwischen direkt an die Telekommunikationsanlage angeschlossenen, mit Bildtelefonen ausgestatteten Teilnehmern als auch über das öffentliche Netz zugeschalteten Personen. Bei Videosignalen ist das einfache Mischen der Signale der Teilnehmer im Gegensatz zu einer Audiokonferenzschaltung nicht möglich. Daher ist es vorgesehen, das Bild desjenigen Teilnehmers zu übertragen, der gerade spricht, indem der Lautstärkepegel der Teilnehmer überwacht wird. Natürlich muß hier eine Schaltung vorgesehen sein, die einen ständiges kurzzeitiges Hin- und Herschalten des Bildes verhindert und die eine geeignete Auswahl trifft, wenn zwei Personen gleichzeitig sprechen. Auch die Einblendung von zusätzlichen Text- oder Bildinformationen kann vorgesehen werden.

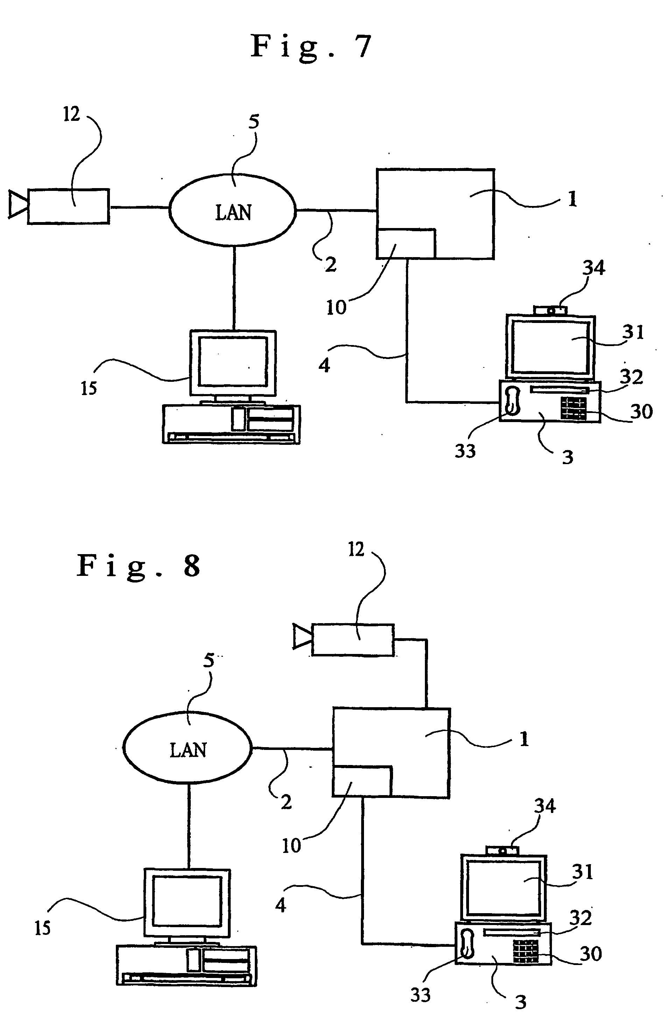

In den Figuren 7 und 8 ist eine Telekommunikationsanlage 1 dargestellt, die Sicherheitsfunktionen, insbesondere Überwachungsfunktionen, unterstützt. Die einfachste Möglichkeit besteht darin, den Benutzern von Bildtelefonen 3 eine Verbindung zu einer Überwachungskamera 12 herzustellen, die gemäß Figur 7 über ein LAN 5 oder gemäß Figur 8 direkt mit der Telekommunikationsanlage 1 verbunden werden kann.

Über den Videosignalgenerator 10 kann eine Darstellung mehrerer Bilder verschiedener Überwachungskameras 12 nebeneinander auf dem Bildschirm 31 des Bildtelefons 3 realisiert werden. Das Bild einer Überwachungkamera 12 kann auch als Hauptbild, die anderer Überwachungskameras als Nebenbilder dargestellt werden. Besonders vorteilhaft ist es, wenn das Hauptbild zyklisch von den verschiedenen Überwachungsbildern gestellt wird. Es erschließt sich auch die Darstellung eines Überwachungsbildes als Nebenbild, während eine andere Anwendung, zum Beispiel einem Bildtelefongespräch, das Hauptbild liefert. Das Bildtelefon 3 erhält auf diese Weise die Funktion eines Überwachungsterminals, mit dem auch großräumig überwacht werden kann, andere Funktionen jedoch parallel möglich sind.

Für ein erweitertes Sicherheitssystem werden in den sicherheitsrelevanten Bereichen Kameras und Mikrophone installiert. Das Audio- und Videosignal wird zum LAN 5 durchgeschaltet und dort von einem Computer 15 weiterverarbeitet und ausgewertet. Für jeden Überwachungspunkt ist ein Grenzwert für die maximale Lautstärke und die maximal zulässige Änderung des aufgenommenen Bildes vorgegeben. Bei Überschreitung der maximalen Lautstärke oder der maximalen Änderung des Bildes werden die Videosignale über die Telekommunikationsanlage 1 automatisch dem Bildtelefon 3 des Sicherheitsmitarbeiters zugeführt, der dann in der Lage ist, die Situation audiovisuell zu erfassen und gegebenenfalls Maßnahmen einzuleiten.

Zusätzlich besteht die Möglichkeit, in bestimmten Abständen die von der Überwachungskamera 12 gelieferten Überwachungsbilder automatisch zu erfassen und für eine vorgegebene Zeit abzuspeichern, um sie bei Bedarf auswerten zu können. Auch hier ist es vorteilhaft, die oben beschriebene Netzwerkschnittstelle zum LAN zu nutzen, um die Daten auf Massenspeichern abzulegen, die im LAN vorgesehen sind.

Eine solche Überwachungsfunktion mit Hilfe der Telekommunikationsanlage kann auch in einem Krankenhaus oder Altenheim zur Überwachung der Patienten eingesetzt werden. Das von einer Überwachungskamera gelieferte Bild wird von der Telekommunikationsanlage einem Bildtelefon zugeführt und ermöglicht dem Arzt oder Pflegepersonal ein schnelles Eingreifen bei Notfällen.

Eine erweiterte Überwachungsmöglichkeit für die Benutzer von Bildtelefonen besteht darin, daß die Telekommunikationsanlage entweder eine Kombination mehrerer Überwachungssignale auf ein Bildtelefon gibt oder zyklisch die Videosignale von verschiedenen Überwachungskameras zu dem Bildtelefon durchschaltet.

Eine weitere sicherheitsrelevante Anwendung einer Telekommunikationsanlage liegt in einer Video-Türfreisprecheinrichtung. Die Realisierung kann hierbei erfolgen, indem eine Kamera über den S₀-Bus an die Telekommunikationsanlage angeschlossen wird. Durch betätigen des Klingelknopfes wird durch die Telekommunikationsanlage ein vorgegebenes Bildtelefon angewählt. Sobald der Benutzer den Ruf annimmt, sieht er den Besucher auf dem Bildschirm und kann anschließend mit Hilfe des Telefonhörers über den Audiokanal mit dem Besucher kommunizieren. Durch die Bildanzeige wird die Sicherheit erhöht, unerwünschten Besuchern die Tür zu öffnen.

Wenn die Telekommunikationsanlage einen Zugriff auf die E-mails des Benutzers mit Hilfe eine E-mail-Interpreters erlaubt, können mit Hilfe der Telekommunikationsanlage auch empfangene E-mails als Videosignale für das Bildtelefon bereitgestellt werden. Der Anforderung eines solchen Dienstes erfolgt wiederum über die Wahl einer vorgegebenen Taste der Tastatur. Der Videosignalgenerator der Telekommunikationsanlage generiert dann zunächst ein Übersichtsmenü über die empfangenen E-mails für das Bildtelefon, wobei die Auswahl der Menüpunkte in der oben beschriebenen Weise erfolgt. Die Auswahl einer E-mail über die Tastatur führt dazu, daß die entsprechende E-mail als Bildinhalt auf dem Bildtelefon dargestellt wird. Über die Wahl von festgelegten Ziffern oder Sonderzeichen kann der Benutzer dann die E-mail löschen, zurück zum Übersichtsmenü schalten oder andere Aktionen ausführen.

Eine automatische Signalisierung ankommender E-mails kann auch vorgenommen werden. Dies kann durch die Einblendung eines Nebenbildes oder auch durch ein Laufband erfolgen, das oben oder unten über den Bildschirm läuft. Eine zusätzliche Signalisierung durch ein Audiosignal kann sinnvoll sein, wenn es sich um wichtige Nachrichten handelt.

Neben dem Empfang von E-mails ist auch die Möglichkeit des Versendens von E-mails sinnvoll. Zunächst wird die E-mail-Adresse des Empfängers eingegeben oder aus einer Auswahlliste ausgewählt. Da die Eingabe von Texten über eine Telefontastatur zu aufwendig wäre, ist die Versendung von Audiound/oder Video-E-mails vorgesehen, die über das Telefon aufgenommen, in der Telekommunikationsanlage zwischengespeichert und anschließend versandt werden.

Wenn die Telekommunikationsanlage den Zugriff auf Seiten des Internets oder eines Intranets besitzt, so bietet die Erfindung die Möglichkeit, diese Seiten als Bildinhalte auf dem Bildtelefon darzustellen. Voraussetzung hierfür ist, daß die Telekommunikationsanlage einen Browser enthält, der in der Lage ist das HTML-Format oder andere Formate zu interpretieren, d.h. in Informationen umzusetzen, die von dem Videosignalgenerator verarbeitbar sind. Die Anforderung dieses Leistungsmerkmals kann wiederum über die Wahl einer Taste geschehen.

Nach dem Aufbau einer Verbindung zwischen der Telekommunikationsanlage und dem Bildtelefon holt sich der Browser eine vordefinierte Internet- oder Intranet-Seite, leitet diese in interpretierter Form dem Videosignalgenerator zu, der die Umwandlung in Videosignale vornimmt und diese zum Bildtelefon überträgt. An die Stellen, an denen die Inter- oder Intranet-Seite Verweise auf andere Seiten (sogenannte Hyperlinks) enthält, blendet die Telekommunikationsanlage automatisch Nummern ins Bild ein. Durch Wahl einer solchen Nummer kann der Benutzer des Bildtelefons die Anzeige der Seite erreichen, auf die verwiesen wird. Eine Navigation durch das Internet ist hierdurch realisierbar, wobei der Browser zur Unterstützung der Navigation bei den Verweisen auf andere HTML-Dokumente selbständig Nummern ins Bild einblendet, die dann durch das Bildtelefon gewählt werden können.

Die Telekommunikationsanlage kann von einer Sprachschule für ausgefallene Sprachen eingesetzt werden, bei der den Teilnehmern die körperliche Teilnahme an Kursen wegen der langen Annreiseweges oder einer körperlichen Behinderung nicht zugemutet werden kann. Die Teilnehmer müssen hierfür mit einem ISDN-Anschluß an das öffentliche Netz angeschlossen und mit einem Bildtelefon ausgestattet sein. Zu Beginn der Kursstunde ruft die Sprachschule die Teilnehmer an und es wird eine Videokonferenzschaltung aufgebaut. Über den Videosignalgenerator kann der Sprachlehrer neben der Übertragung des Hauptbildes weitere Videosignale, zum Beispiel die Schreibweise von Vokabeln, von einem Computergestützes Steuerterminal aus als Nebenbild einblenden. Darüber hinaus ist es dem Sprachlehrer möglich, die Teilnehmer auch mit vorbereiteten Übungsvideos oder interaktiven Computerapplikationen zu versorgen. An den Stellen, an denen der Teilnehmer die Aussprache von Worten üben soll, ist die Applikation mit einem Spracherkennungsalgorithmus ausgestattet, der die Aussprache der Teilnehmer bewertet. Neben einer Sprachschule kann diese Anwendung natürlich auch für ein Fernstudium oder den Fernunterricht von Kindern in abgelegenen Gebieten eingesetzt werden.

Auch kann Gehörlosen, die über ein Bildtelefon an das öffentliche Netz angeschlossen sind, mit Hilfe der Telekommunikationsanlage das Telefonieren mit Nicht-Gehörlosen deutlich erleichtert werden. Verfügt der Nicht-Gehörlose ebenfalls über ein Bildtelefon kann bei einer weiteren Verbesserung der Spracherkennungsprogramme der Videosignalgenerator eine automatische Einblendung der von dem Gesprächsteilnehmer gesprochenen Worte als Text vornehmen.

Der Gehörlose kann seinen Gesprächspartner sehen und gleichzeitig dessen Worte über den Text erfassen.

Die Erfindung beschränkt sich in ihrer Ausführung nicht auf die vorstehend angegebenen bevorzugten Ausführungsbeispiele. Vielmehr ist eine Anzahl von Varianten denkbar, die von der erfindungsgemäßen Telekommunikationsanlage auch bei grundsätzlich anders gearteten Ausführungen Gebrauch machen.

## Patentansprüche

1. Telekommunikationsanlage (1) zur Übertragung von Video- und/oder Audiosignalen, die mit mindestens einem Telekommunikationsendgerät (3; 3a, 3b) mit einer Bildanzeigevorrichtung (31) und einer Tastatur (30), insbesondere einem Bildtelefon, verbindbar ist, wobei ein Videosignalgenerator (10) vorgesehen ist, der ein Videosignal in einem dem Telekommunikationsendgerät (3; 3a, 3b) entsprechenden Datenformat und Datenprotokoll erzeugt, wobei der Videosignalgenerator (10) zusätzlich mindestens ein weiteres Videosignal erzeugt und dieses weitere Videosignal alternativ zu oder in Kombination mit dem einen Videosignal zu dem oder zu den Telekommunikationsendgerät (en) (3; 3a, 3b; 7) überträgt,
**dadurch gekennzeichnet,**
**daß** das mindestens eine weitere Videosignal Benutzerführungsinformationen zur Abfrage und/oder zur Programmierung von Leistungsmerkmalen der Telekommunikationsanlage (1) mittels der Tastatur (30) des Telekommunikationsendgerätes (3; 3a, 3b) enthält.

2. Telekommunikationsanlage nach Anspruch 1, **dadurch gekennzeichnet, daß** das mindestens eine weitere Videosignal ein Nebenbild in einem durch das Videosignal erzeugten Hauptbild des Bildschirms (31) eines als Bildtelefon (3) ausgebildeten Telekommunikationsendgerätes einblendet.

3. Telekommunikationsanlage nach Anspruch 1 oder 2, **dadurch gekennzeichnet, daß** das mindestens eine weitere Videosignal ein Auswahlmenü erzeugt, in dem den einzelnen Menüfeldern Tastaturcodes zugeordnet sind.

4. Telekommunikationsanlage nach Anspruch 1 oder 2, **dadurch gekennzeichnet, daß** das mindestens eine weitere Videosignal Informationen über den Status der Telekommunikationsanlage (1) und/oder mit der Telekommunikationsanlage (1) verbundenen Telekommunikationsendgeräten (3; 3a, 3b; 7) enthält.

5. Telekommunikationsanlage nach Anspruch 4, **dadurch gekennzeichnet, daß** der Status der Besetztzustand eines anderen Audiotelefons (7) oder Bildtelefons (3a) ist.

## Claims

1. Telecommunications system (1) for transmitting video and/or audio signals, which can be connected to at least one telecommunications terminal (3; 3a, 3b) with a video display apparatus (31) and a keypad (30), in particular a video telephone, with a video signal generator (10) being provided, which produces a video signal in a data format and data protocol appropriate to the telecommunications terminal (3; 3a, 3b), with the video signal generator (10) additionally producing at least one further video signal, and transmitting this further video signal as an alternative to or in combination with the one video signal to the telecommunications terminal or terminals (3; 3a, 3b; 7),
**characterized**
**in that** the at least one further video signal contains user guidance information for interrogation and/or for programming service features of the telecommunications system (1) by means of the keypad (30) of the telecommunications terminal (3; 3a, 3b).

2. Telecommunications system according to Claim 1, **characterized in that** the at least one further video signal overlays a secondary picture in a main picture, which is produced by the video signal, on the screen (31) of a telecommunications terminal which is in the form of a video telephone (3).

3. Telecommunications system according to Claim 1 or 2, **characterized in that** the at least one further video signal produces a selection menu, in which keypad codes are allocated to the individual menu fields.

4. Telecommunications system according to Claim 1 or 2, **characterized in that** the at least one further video signal includes information relating to the status of the telecommunications system (1) and/or telecommunications terminals (3; 3a, 3b; 7) which are connected to the telecommunications system (1).

5. Telecommunications system according to Claim 4, **characterized in that** the status is the busy state of another audio telephone (7) or video telephone (3a).

## Revendications

1. Installation de télécommunication (1) pour la transmission de signaux vidéo et/ou audio, laquelle installation peut être raccordée avec au moins un appareil émetteur de télécommunication (3;3a,3b) avec un dispositif afficheur d'image (31) et un clavier (30), en particulier un visiophone, dans laquelle il est prévu un générateur de signaux vidéo (10) qui produit un signal vidéo dans un format de données et protocole de données correspondant à l'appareil émetteur de télécommunication (3;3a,3b), dans laquelle le générateur de signaux vidéo (10) produit de plus au moins un signal vidéo supplémentaire et transmet ce signal vidéo supplémentaire alternativement en plus ou en combinaison avec le signal vidéo à ou aux appareil(s) émetteur(s) de télécommunication (3;3a,3b;7),
**caractérisée en ce que**,
le au moins un signal vidéo supplémentaire contient des informations de guidage pour l'utilisateur pour l'interrogation et/ou la programmation de caractéristiques de performance de l'installation de télécommunication (1) au moyen du clavier (30) de l'appareil émetteur de télécommunication (3;3a,3b).

2. Installation de télécommunication selon la revendication 1, **caractérisée en ce que** le au moins un signal vidéo supplémentaire incruste une image annexe dans une image principale produite par le signal vidéo de l'écran d'affichage (31) d'un appareil émetteur de télécommunication conçu en tant que visiophone (3).

3. Installation de télécommunication selon la revendication 1 ou 2, **caractérisée en ce que** le au moins un signal vidéo supplémentaire produit un menu de sélection dans lequel des codes de clavier sont affectés aux différentes zones du menu.

4. Installation de télécommunication selon la revendication 1 ou 2, **caractérisée en ce que** le au moins un signal vidéo supplémentaire contient des informations sur l'état de l'installation de télécommunication (1) et/ou des appareils émetteurs de télécommunication (3;3a,3b;7) raccordés à l'installation de télécommunication (1).

5. Installation de télécommunication selon la revendication 4, **caractérisée en ce que** l'état est la situation d'occupation d'un autre audiophone (7) ou visiophone (3a).
